# FASCICULE DE BREVET EUROPEEN

(11) **EP 3 626 610 B1**
(45) Date de publication et mention de la délivrance du brevet: **31.08.2022**
(21) Numéro de dépôt: 19197051.6
(22) Date de dépôt: 12.09.2019
(51) Int. Cl.: B64C 25/04

(54) **MODULE DE TRAIN D'ATTERRISSAGE AVANT POUR AÉRONEF**
VORDERES FAHRWERKSMODUL FÜR LUFTFAHRZEUG
MODULE FOR FRONT LANDING GEAR FOR AN AIRCRAFT

(30) Priorité: 20.09.2018 FR 1858504
(43) Date de publication de la demande: 25.03.2020
(73) Titulaire: AIRBUS OPERATIONS (S.A.S.), 31060 Toulouse (FR)
(72) Inventeur: BERNADET, Philippe, 31060 TOULOUSE Cedex 9 (FR)
(74) Mandataire: Gicquel, Olivier Yves Gérard

(56) Documents cités:
- WO-A1-2007/057400
- FR-A1- 2 910 875
- FR-A1- 2 917 369
- US-A1- 2009 078 822

## Description

### DOMAINE TECHNIQUE

La présente invention concerne un module de train d'atterrissage avant pour un aéronef.

### ÉTAT DE LA TECHNIQUE

Le temps de fabrication d'un aéronef, en particulier d'un avion de transport, est un critère important que les avionneurs cherchent à réduire le plus possible, en particulier pour des raisons de coût.

Les trains d'atterrissage, et en particulier le train d'atterrissage avant, qui sont des éléments lourds et complexes nécessitent des durées de fabrication et d'installation importantes. Ces durées ont une incidence négative sur le temps de fabrication de l'aéronef. Le document FR2910875 présente une partie avant comprenant une zone de logement de train dans laquelle seule une unique paroi constitue l'interface de séparation entre la zone pressurisée et non pressurisée contrairement aux solutions de l'art antérieur dans lesquelles plusieurs parois agencées à l'intérieur de la zone pressurisée étaient requises ce qui simplifie sensiblement la fabrication.

### EXPOSÉ DE L'INVENTION

La présente invention propose un module de train d'atterrissage pour aéronef, permettant de réduire le temps de fabrication de l'aéronef auquel il est destiné.

Selon l'invention, ledit module de train d'atterrissage avant est monobloc et il comporte un caisson ouvert, ledit caisson étant pourvu d'au moins une porte configurée pour pouvoir être ouverte et fermée, ledit caisson contenant un train d'atterrissage avant déployable configuré pour pouvoir être déployé à travers ladite porte, ledit module de train d'atterrissage avant comportant un système de fixation destiné à fixer ledit module de train d'atterrissage avant sur l'aéronef.

Dans le cadre de la présente invention, on entend par « module monobloc » un module qui est d'un seul bloc ou unitaire (c'est-à-dire qui correspond à un seul objet).

Ainsi, grâce à l'invention, le train d'atterrissage avant fait partie d'un module, c'est-à-dire d'un ensemble unitaire, apte à être monté directement sur l'aéronef.

Ce module de train d'atterrissage avant est préfabriqué et préassemblé, avant d'être intégré dans la structure du fuselage de l'aéronef, de préférence tardivement dans le processus de fabrication. Cette modularité permet de réaliser parallèlement (ou simultanément) différentes opérations (et notamment la fabrication dudit module de train d'atterrissage avant) lors de la fabrication de l'aéronef, ce qui a notamment pour avantage de réduire le temps de fabrication global dudit aéronef.

Dans le cadre de la présente invention, le train d'atterrissage avant est le train d'atterrissage qui est monté sous l'aéronef à l'avant de ce dernier. Ce train d'atterrissage avant est orientable, notamment pour permettre une orientation de la direction de roulage lors d'un roulage au sol de l'aéronef.

Avantageusement, ledit caisson présente une forme externe aérodynamique correspondant à une forme prédéterminée pour une partie avant basse du fuselage de l'aéronef de manière à s'insérer directement dans ledit fuselage en créant une continuité aérodynamique, lorsque ledit module est intégré dans l'aéronef.

Dans un mode de réalisation particulier, ledit caisson est pourvu d'un châssis de porte et de deux portes adjacentes, liées chacune à une partie de ce châssis de porte.

En outre, dans un mode de réalisation préféré, le système de fixation comporte des éléments de liaison, de préférence deux bielles, auxquels est lié au moins le train d'atterrissage avant, lesdits éléments de liaison étant configurés pour pouvoir être liés à l'aéronef. Avantageusement, le module de train d'atterrissage avant comporte de plus une pluralité d'éléments de renfort, de préférence des biellettes de renfort, chacun desdits éléments de renfort liant l'un desdits éléments de liaison audit caisson, et notamment audit châssis de porte.

En outre, de façon avantageuse, le système de fixation est configuré pour réaliser une fixation auxiliaire d'un bord supérieur du caisson, entourant l'ouverture dudit caisson ouvert.

Par ailleurs, avantageusement :
- ledit caisson comporte une cloison avant plane ; et/ou
- ledit caisson est pourvu d'au moins une trappe d'accès permettant d'accéder (de l'extérieur) à l'intérieur dudit caisson.

La présente invention concerne également un aéronef, en particulier un avion de transport.

Selon l'invention, ledit aéronef est pourvu d'un module de train d'atterrissage avant tel que celui décrit ci-dessus.

Avantageusement, ledit aéronef comporte une baie à l'avant sous le poste de pilotage, dans laquelle est fixé ledit module de train d'atterrissage avant.

Dans un premier mode de réalisation, la paroi de ladite baie est formée d'une pluralité de secteurs (ou tronçons) adjacents, dont de préférence au moins certains sont sensiblement plans, alors que dans un second mode de réalisation, la paroi de ladite baie présente une forme générale courbe (en continu).

En outre, de façon avantageuse, l'aéronef comporte dans la baie :
- des supports de fixation avant et arrière pour lesdits éléments de liaison ; et
- des supports de fixation pour ledit châssis de porte.

De plus, avantageusement, l'aéronef est pourvu d'une fixation auxiliaire du bord supérieur du caisson sur le fuselage de l'aéronef.

Par ailleurs, de façon avantageuse, une cloison avant du module de train d'atterrissage est complémentaire d'une cloison avant du fuselage de l'aéronef, lesdites cloisons avant (du module et du fuselage) formant une paroi unique, de préférence plane, lorsque le module de train d'atterrissage avant est fixé sur l'aéronef.

En outre, avantageusement, une paroi externe aérodynamique du caisson du module de train d'atterrissage avant correspond à une partie avant basse du fuselage de l'aéronef.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est une vue schématique, en perspective, d'un mode de réalisation particulier d'un module de train d'atterrissage avant ;
- la figure 2 est une vue schématique, en perspective, d'un module de train d'atterrissage avant, en phase d'intégration sur un aéronef représenté partiellement ;
- la figure 3 est une vue schématique, partielle et en perspective, d'une partie d'un caisson du module de train d'atterrissage avant de la figure 2, montrant notamment des trappes d'accès ;
- la figure 4 est une vue schématique, en perspective, d'une partie avant d'un aéronef pourvu d'une baie destinée au logement d'un module de train d'atterrissage avant ;
- la figure 5 est une vue schématique, en perspective, d'une paroi d'une baie d'aéronef, pourvue d'une pluralité de tronçons adjacents ;
- la figure 6 est une vue partielle, en coupe, montrant un premier mode de fixation d'un module de train d'atterrissage avant dans une baie présentant une paroi telle que celle de la figure 5 ;
- la figure 7 est une vue, en coupe, montrant un second mode de fixation d'un module de train d'atterrissage avant dans une baie présentant une paroi telle que celle de la figure 5 ; et
- la figure 8 est une vue, en coupe, montrant un mode de fixation particulier d'un module de train d'atterrissage avant, dans d'une baie d'aéronef présentant une paroi courbe.

### DESCRIPTION DÉTAILLÉE

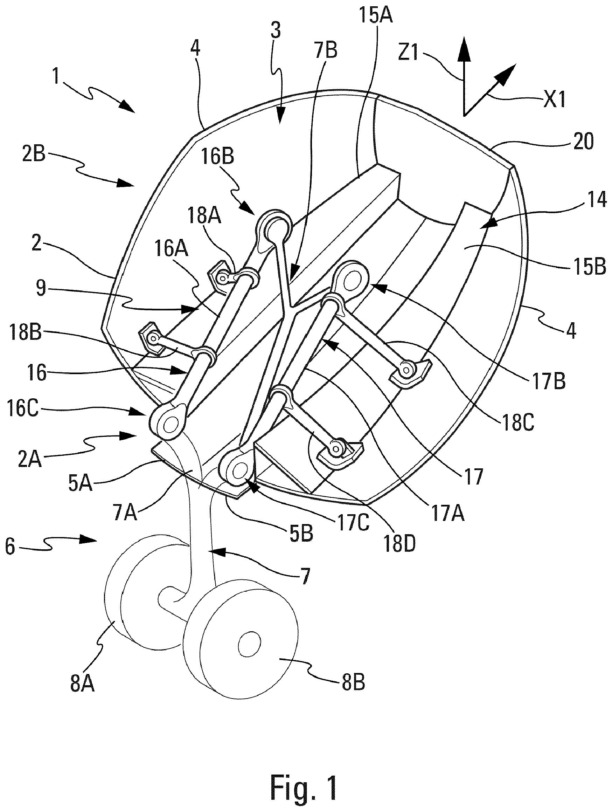

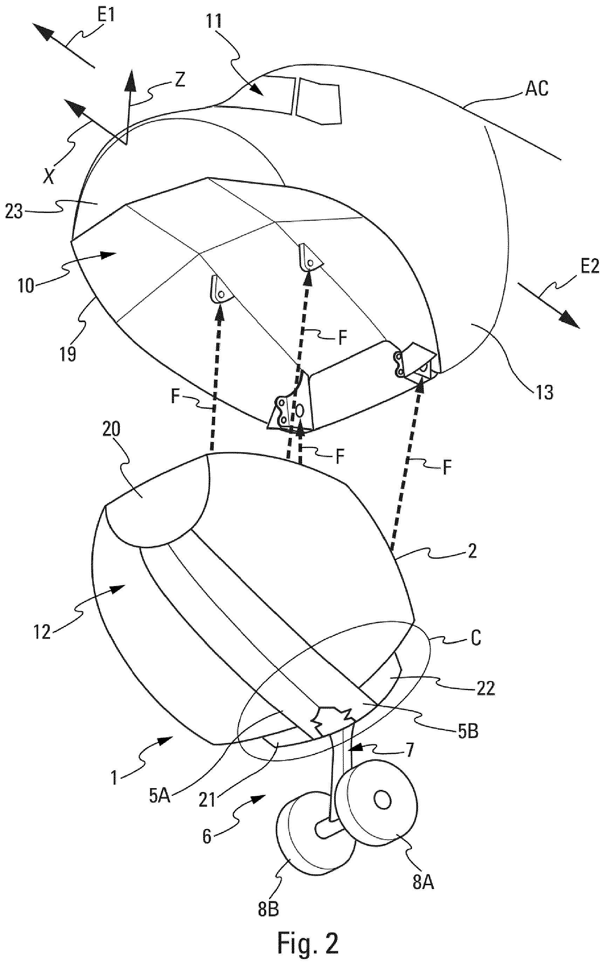

Le module de train d'atterrissage avant (nommé « module » ci-après) 1, qui est représenté schématiquement dans un mode de réalisation particulier sur la figure 1, est destiné à être fixé sur un aéronef AC, en particulier sur un avion de transport, comme illustré sur la figure 2.

Dans le cadre de la présente invention, les sens "avant" et "arrière" sont définis par rapport à la direction longitudinale de l'aéronef AC, à savoir pour "avant" (comme illustré par une flèche E1 sur la figure 2) vers l'avant de l'aéronef AC dans le sens de vol (ou de déplacement) de l'aéronef AC, et pour "arrière" (comme illustré par une flèche E2 sur la figure 2) vers l'arrière de l'aéronef AC dans le sens inverse au sens de vol (ou de déplacement) de l'aéronef AC.

Par ailleurs, dans le cadre de la présente description, les termes "inférieur", "supérieur", "bas" et "haut", lorsqu'ils sont appliqués à l'aéronef AC, sont définis par rapport à une direction dite verticale Z relative à l'aéronef AC. Comme représenté sur la figure 2, cette direction verticale Z est telle qu'elle forme avec une direction dite longitudinale X (qui est définie selon l'axe longitudinal de l'aéronef AC) un plan (dit vertical) de symétrie de l'aéronef AC.

De même, les termes "inférieur", "supérieur", "bas" et "haut", lorsqu'ils sont appliqués au module 1, sont définis suivant une direction verticale Z1 définie par rapport audit mobile 1, comme représenté sur la figure 1. Cette direction verticale Z1 et une direction longitudinale X1, orthogonales entre elles, sont telles que, dans la position montée du module 1 (dans laquelle il est complètement intégré dans l'aéronef AC), elles sont parallèles respectivement auxdites directions Z et Y définies par rapport à l'aéronef AC.

Selon l'invention, ledit module 1 comporte un caisson 2, comme représenté sur la figure 1 notamment. Ce caisson 2 est ouvert, avec une ouverture 3 prévue sur toute sa partie haute (ou supérieure) 2B. Cette ouverture 3 forme un bord 4 supérieur.

Le caisson 2 est pourvu d'au moins une porte et de préférence de deux portes 5A et 5B dans sa partie basse (ou inférieure) 2A. Ces portes 5A et 5B sont configurées pour pouvoir être ouvertes et fermées. En position fermée des portes 5A et 5B, la partie basse 2A du caisson 2 est complètement fermée.

Ledit caisson 2 contient un train d'atterrissage avant 6 apte à être déployé. Ce train d'atterrissage 6 qui est représenté de façon schématique sur la figure 1 est de type usuel. Ce train d'atterrissage avant 6 comporte, en plus d'un support de roues 7 et de roues 8A et 8B orientables, tous les éléments usuels d'un train d'atterrissage, qui ne sont pas décrits davantage.

Le train d'atterrissage avant 6 est configuré pour pouvoir être déployé, de façon usuelle, à travers les portes 5A et 5B lorsqu'elles sont ouvertes. Pour des raisons de simplification de dessin, sur la figure 1, on a représenté en trait fin la position déployée du train d'atterrissage avant 6 alors que les portes 5A et 5B sont fermées. Bien entendu, ce déploiement a uniquement lieu avec les portes 5A et 5B ouvertes.

Ledit module 1 comporte, de plus, un système de fixation 9 destiné à fixer ledit module 1 sur l'aéronef AC.

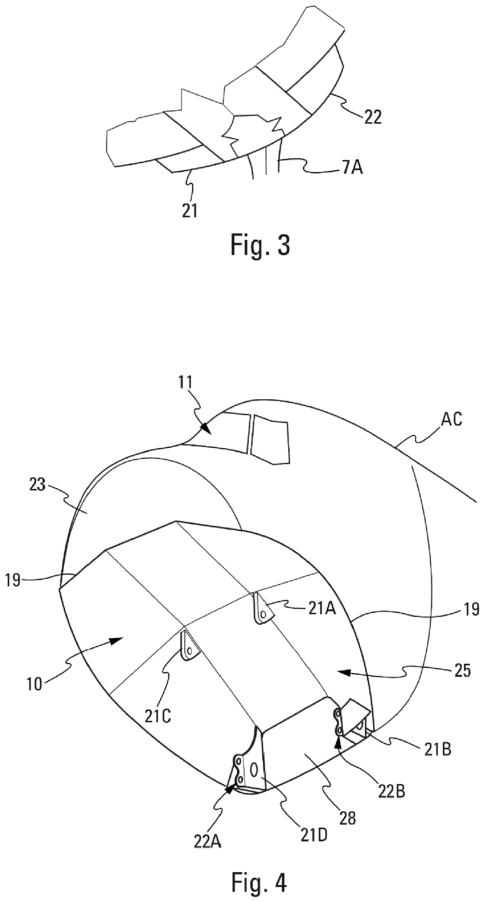

A cet effet, l'aéronef AC comporte, comme représenté sur les figures 2 et 4, une baie 10 à l'avant sous le poste de pilotage 11, dans laquelle est fixé le module 1 (de train d'atterrissage avant).

Pour ce faire, comme illustré sur la figure 2, le caisson 2 du module 1 présente une paroi externe aérodynamique 12 de forme correspondant à une forme prédéterminée usuelle de la partie avant basse du fuselage 13 de l'aéronef de sorte que, lorsque le caisson 2 est intégré dans la baie 10, l'aéronef AC présente une forme aérodynamique continue usuelle. Cette forme aérodynamique continue est formée du fuselage 13 et de la paroi aérodynamique externe 12 du caisson 2. La paroi externe aérodynamique 12 du caisson 2 correspond donc, en position montée et fixée, à une partie avant basse du fuselage global de l'aéronef AC, en fermant la baie 10.

Dans un mode de réalisation particulier, ledit caisson 2 est pourvu d'un châssis de porte (ou encadrement) 14, comme représenté sur la figure 1. Ce châssis de porte 14 comprend, notamment, deux longerons 15A et 15B de renfort agencés selon la direction X1. Ces longerons 15A et 15B présentent, de préférence, une structure allongée en caisson, par exemple de section transversale triangulaire ou autre. Chacune des portes 5A et 5B est liée à un longeron 15A, 15B du châssis de porte 14.

Le châssis de porte 14 ainsi formé permet de renforcer la résistance du caisson 2 au niveau des portes 5A et 5B.

Par ailleurs, dans un mode de réalisation préféré, le système de fixation 9 comporte des éléments de liaison auxquels est lié le train d'atterrissage 6 avant. Dans une réalisation préférée, représentée notamment sur la figure 1 et décrite ci-dessous, le système de fixation 9 comporte deux bielles 16 et 17 comme éléments de liaison. Ces bielles 16 et 17 sont configurées pour pouvoir être liées à l'aéronef AC, comme précisé ci-après.

La bielle 16 comporte, comme représenté sur la figure 1, une tige 16A rigide, pourvue à ses extrémités d'une articulation avant 16B et d'une articulation arrière 16C.

De même, la bielle 17 comporte une tige 17A rigide, pourvue à ses extrémités d'une articulation avant 17B et d'une articulation arrière 17C.

Le train d'atterrissage avant 6 est lié, à l'arrière, aux bielles 16 et 17 au niveau des articulations 16C et 17C par l'intermédiaire d'une pièce mécanique 7A par exemple en forme de fourche. Cette pièce mécanique 7A est liée au support de roues 7.

De plus, le train d'atterrissage avant 6 est lié, à l'avant, aux bielles 16 et 17 au niveau des articulations avant 16B et 17B par l'intermédiaire d'une pièce mécanique 7B également en forme de fourche.

Les bielles 16 et 17 peuvent également avoir, en plus d'une fonction d'entretoise, une fonction de préhension du module 1, mise en œuvre par l'intermédiaire d'un outil approprié, lors du montage dudit module 1 notamment.

En variante (non représentée), les éléments de liaison du système de fixation 9 peuvent également être réalisés sous forme d'autres éléments structuraux, et en particulier sous forme de ferrures ou sous forme de panneaux se raccordant à des caissons sous-jacents.

Le module 1 comporte, en outre, une pluralité d'éléments de renfort. De préférence, comme représenté sur la figure 1, ces éléments de renfort sont des biellettes 18A, 18B, 18C et 18D de renfort. Chacune de ces biellettes 18A à 18D lie l'une desdites bielles 16 et 17 audit caisson 2.

Plus précisément, chacune des biellettes 18A et 18B est liée de façon articulée, d'une part à la tige 16A de la bielle 16, et d'autre part au longeron 15A du châssis de porte 14 qui est intégré dans le caisson 2.

De même, chacune des biellettes 18C et 18D est liée de façon articulée, d'une part à la tige 17A de la bielle 17, et d'autre part au longeron 15B du châssis de porte 14 qui est intégré dans le caisson 2.

Ces biellettes 18A à 18D (en lien avec les bielles 16 et 17) permettent d'augmenter la rigidité structurale du caisson 2, et ceci à la fois :
- lorsque le caisson 2 est transporté et déplacé, avant et pendant son installation sur l'aéronef AC ; et
- lorsqu'il est intégré dans l'aéronef AC, en participant à renforcer la rigidité globale du fuselage de l'aéronef AC.

Dans une variante de réalisation (non représentée), il peut être envisagé, notamment pour réduire l'encombrement et la masse, de démonter les biellettes 18A à 18D après l'intégration du module 1 dans l'aéronef AC.

Par ailleurs, en variante (non représentée), les éléments de renfort peuvent également être réalisés sous forme d'autres éléments structuraux, par exemple sous forme de ferrures.

Par ailleurs, en plus de la fixation principale réalisée par les bielles 16 et 17, le système de fixation 9 est configuré pour réaliser une fixation auxiliaire (ou secondaire). Cette fixation auxiliaire a pour but de fixer le bord supérieur 4 du caisson 2, entourant l'ouverture 3 dudit caisson 2, sur un bord 19 externe de la baie 10 (figures 2 et 4). On entend par bord externe, le bord de la baie qui est situé vers l'extérieur de l'aéronef au niveau du fuselage 13. Pour ce faire, le bord supérieur 4 vient au contact du bord 19 externe pour créer une face externe de l'ensemble formé de l'aéronef AC et du module 1 intégré, qui est aérodynamique.

Dans le cadre de la présente invention, le bord supérieur 4 peut être fixé contre le bord 19 externe de la baie 10 de différentes manières. En particulier, il peut être fixé par des rivets, notamment des rivets aveugles. Une telle fixation est possible en raison d'un accès de l'extérieur, d'une absence de besoin d'une étanchéité à l'air et de charges réduites.

La fixation auxiliaire peut également être réalisée par un emboîtement du bord supérieur 4 et du bord 19 externe de la baie 10, en prévoyant des formes complémentaires appropriées pour ces bords 4 et 19.

Par ailleurs, comme représenté sur les figures 1 et 2, ledit caisson 2 comporte une cloison avant 20 plane.

En outre, dans un mode de réalisation particulier, le caisson 2 est également pourvu de trappes d'accès 21 et 22, comme représenté sur la figure 3 (qui illustre la partie du caisson 2 entourée par un tracé C fermé sur la figure 2). Ces trappes 21 et 22 permettent d'accéder à l'intérieur du caisson 2, notamment pour accéder à des éléments de fixation du train d'atterrissage avant, précisés ci-dessous.

L'aéronef AC, auquel est destiné le module 1, doit donc comporter une baie 10 à l'avant sous le poste de pilotage 11, comme illustré sur la figure 4, dans laquelle est fixé le module 1. L'aéronef AC présente donc une configuration dite à baie ouverte.

Comme montré sur la figure 4, l'aéronef AC comporte dans la baie 10, notamment :
- un support de fixation 21A avant et un support de fixation 21B arrière pour la bielle 16. Plus précisément, l'articulation avant 16B de la bielle 16 est liée (et articulée) au support de fixation 21A avant, et l'articulation arrière 16C de la bielle 16 est liée (et articulée) au support de fixation 21B arrière ; et
- un support de fixation 21C avant et un support de fixation 21D arrière pour la bielle 17. Plus précisément, l'articulation avant 17B de la bielle 17 est liée (et articulée) au support de fixation 21C avant, et l'articulation arrière 17C de la bielle 17 est liée (et articulée) au support de fixation 21D arrière.

La baie 10 est également pourvue de supports de fixation 22A et 22B pour le châssis de porte 14, qui sont agencés à proximité des supports de fixation 21D et 21B.

Ces supports de fixation (principalement 21A à 21D et également 22A et 22B) permettent de transférer les charges au fuselage. Ils mettent en œuvre la fixation principale du caisson 2 et du train d'atterrissage avant 6 sur l'aéronef AC. De plus, l'aéronef AC comporte une fixation auxiliaire (ou secondaire) du bord supérieur 4 du caisson 2 sur le fuselage de l'aéronef, comme indiqué ci-dessus.

Dans le cadre de la présente invention, la paroi 25, 26 externe de la baie 10 (c'est-à-dire la paroi située vers l'extérieur de l'aéronef AC) qui est étanche peut être réalisée de différentes manières. La manière choisie dépend, notamment, de la résistance structurale de la paroi obtenue et de critères (temps, coût, ...) de fabrication.

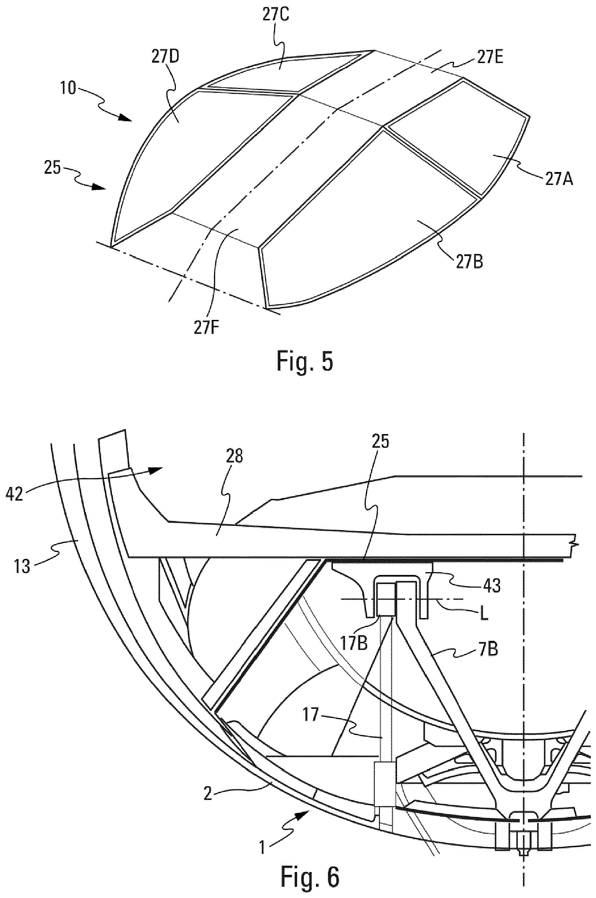

La partie interne 42 (figures 6 à 8) de l'aéronef AC, qui est délimitée vers l'extérieur par la paroi 25, 26 de la baie 10, est pressurisée. La paroi 25, 26 doit donc être configurée pour pouvoir supporter la pression générée par la pressurisation.

Dans un premier mode de réalisation, la baie 10 présente une paroi 25 comprenant une pluralité de secteurs 27A à 27F (notamment des panneaux) adjacents. De préférence bien que non exclusivement, au moins certains de ces secteurs sont plans, comme représenté notamment sur les figures 4 et 5. La paroi 25 comporte également une cloison arrière 28 renforcée, montrée sur la figure 4.

Dans un mode de réalisation particulier, les secteurs 27E et 27F et la cloison 28 sont sensiblement plans, et les secteurs 27A à 27B sont légèrement incurvés. Les secteurs 27A à 27F et la cloison 28 peuvent être positionnés les uns par rapport aux autres (et par rapport au fuselage de l'aéronef) pour maximiser la résistance à la pression de la paroi 25.

Sur la figure 6, relative à un premier mode de fixation possible du module 1 sur une baie 10 présentant une paroi 25 telle que celle des figures 4 et 5, on a représenté une ferrure 43 (représentant de préférence le support de fixation 21C) à laquelle est articulée, à la fois, l'articulation avant 17B de la bielle 17 et une branche de la pièce mécanique 7B en forme de fourche, par l'intermédiaire d'une articulation d'axe L.

Chacune des extrémités 16B et 17B des bielles 16 et 17 est articulée dans une telle ferrure 43 respective.

De plus, la ferrure 43 est fixée à une poutre 28 transversale. En plus de servir de pièce de fixation pour la ferrure 43 et donc pour une partie du module 1, cette poutre 28 qui est liée de part et d'autre au fuselage 13 permet de renforcer la rigidité structurale de la partie interne 42 de l'aéronef AC qui est pressurisée.

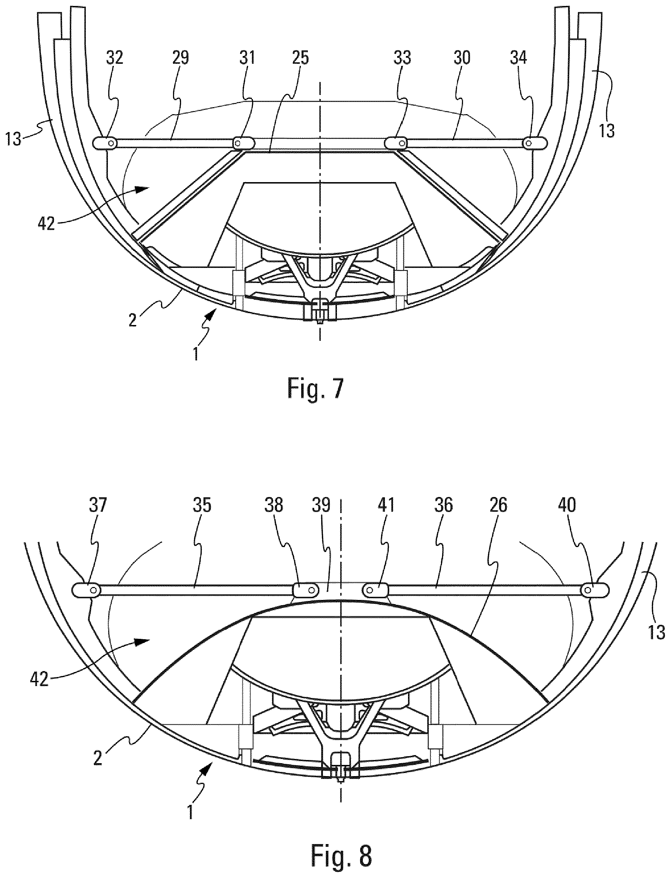

La figure 7 montre un second mode de fixation (et de structuration) de la paroi 25. Dans ce second mode de fixation, la poutre 28 (de la figure 6) est remplacée par des tirants 29 et 30. Le tirant 29 est articulé, d'une part à une pièce de support 31 fixée à la paroi 25, et d'autre part à une pièce de support 32 fixée à l'intérieur du fuselage 13.

De même, le tirant 30 est articulé, d'une part à une pièce de support 33 fixée à la paroi 25, et d'autre part à une pièce de support 34 fixée à l'intérieur du fuselage 13.

Dans un second mode de réalisation, la paroi 26 de la baie présente une forme externe courbe, comme représenté sur la figure 8.

La figure 8 montre un mode de fixation de la paroi 26. Ce mode de fixation comporte des tirants 35 et 36. Le tirant 35 est articulé, d'une part à une pièce de support 37 fixée à l'intérieur du fuselage 13, et d'autre part à une pièce de support 38 fixée à une pièce de liaison 39 solidaire de la paroi 26.

De même, le tirant 36 est articulé, d'une part à une pièce de support 40 fixée à l'intérieur du fuselage 13, et d'autre part à une pièce de support 41 fixée à la pièce de liaison 39 solidaire de la paroi 26.

Par ailleurs, la cloison avant 20, de préférence, sensiblement plane du caisson 2 est complémentaire d'une cloison avant 23, de préférence également sensiblement plane, du fuselage de l'aéronef AC, comme montré sur la figure 2. Ces cloisons avant 20 et 23 forment une paroi unique, de préférence plane, lorsque le module 1 est fixé sur l'aéronef AC. De façon usuelle, une partie (non représentée) en ogive, généralement un radôme, est agencée à l'avant de l'aéronef sur cette paroi. De préférence, la cloison avant 20 est étanche, notamment pour éviter la pénétration de poussières ou autres éléments dans le radôme, en particulier quand les portes 5A et 5B sont ouvertes.

Par conséquent, dans le cadre de la présente invention, les composants du train d'atterrissage avant 6 sont regroupés dans le module 1. Ce module 1 est installé sur l'aéronef AC à l'extérieur de la zone pressurisée (comprenant notamment la partie 42) de l'aéronef AC, de sorte qu'il n'a pas à supporter la pression générée par la pressurisation.

Le procédé de fabrication et d'installation du module 1, tel que décrit ci-dessus, comprend, notamment, les étapes suivantes :
- une étape de fabrication, au cours de laquelle le module 1 de train d'atterrissage avant est fabriqué et assemblé, avec l'ensemble des pièces décrites ci-dessus et notamment avec le train d'atterrissage avant 6 ; et
- une étape d'assemblage (ou de montage) au cours de laquelle le module 1 en tant qu'ensemble unitaire est intégré dans la structure du fuselage 13 de l'aéronef AC, de préférence tardivement dans le processus de fabrication de l'aéronef, en étant amené en position dans la baie 10, comme illustré par des flèches F sur la figure 2, et en étant fixé.

Ainsi, grâce à l'invention, le train d'atterrissage avant 6 de l'aéronef AC fait partie d'un module 1, c'est-à-dire d'un ensemble unitaire (monobloc) qui est apte à être monté directement (en tant qu'ensemble unitaire) sur l'aéronef AC au niveau de la baie 10.

Cette modularité permet de réaliser, parallèlement (ou simultanément), des opérations de fabrication et d'assemblage lors de la fabrication de l'aéronef, ce qui a notamment pour avantage de réduire le temps de fabrication global dudit aéronef.

En particulier, il est possible de réalisation des essais de déploiement du train d'atterrissage avant 6 et d'ouverture et/ou de réglage des portes 5A et 5B sur le module 1. Ces tests et réglages, réalisés au stade de la fabrication du module 1, permettent d'accroître l'efficacité (temps et coût) de l'assemblage. L'opération de montage du module 1 dans la structure du fuselage 13 de l'aéronef AC se réduit à le fixer et à connecter les différents éléments.

Le module 1, tel que décrit ci-dessus, présente d'autres avantages. En particulier, il permet d'obtenir notamment :
- une réduction de la masse de l'ensemble des pièces relatives au train d'atterrissage avant ; et
- une réduction du coût (notamment de fabrication) lié à l'intégration du train d'atterrissage avant sur l'aéronef.

## Revendications

1. Module de train d'atterrissage avant pour aéronef, le module étant monobloc à savoir formant un ensemble unitaire, apte à être monté directement sur l'aéronef , ledit module comportant un caisson (2) ouvert présentant une paroi externe aérodynamique (12), ledit caisson (2) étant en outre pourvu d'au moins une porte (5A, 5B) configurée pour pouvoir être ouverte et fermée, ledit caisson (2) contenant un train d'atterrissage avant (6) déployable configuré pour pouvoir être déployé à travers ladite porte (5A, 5B), ledit module de train d'atterrissage avant (1) comportant un système de fixation (9) destiné à fixer ledit module de train d'atterrissage avant (1) sur l'aéronef (AC).

2. Module de train d'atterrissage avant selon la revendication 1, **caractérisé en ce que** ledit caisson (2) présente une forme externe aérodynamique (12) correspondant, en position montée et fixée, à une forme prédéterminée pour une partie avant basse du fuselage (13) de l'aéronef (AC).

3. Module de train d'atterrissage avant selon l'une des revendications 1 et 2, **caractérisé en ce que** ledit caisson (2) est pourvu d'un châssis de porte (14) et de deux portes adjacentes (5A, 5B) liées, chacune, à une partie (15A, 15B) de ce châssis de porte (14).

4. Module de train d'atterrissage avant selon l'une quelconque des revendications précédentes, **caractérisé en ce que** le système de fixation (9) comporte des éléments de liaison (16, 17) auxquels est lié au moins le train d'atterrissage avant (6), lesdits éléments de liaison (16, 17) étant configurés pour pouvoir être liés à l'aéronef (AC).

5. Module de train d'atterrissage avant selon la revendication 4, **caractérisé en ce qu'**il comporte une pluralité d'éléments de renfort (18A, 18B, 18C, 18D), chacun desdits éléments de renfort (18A, 18B, 18C, 18D) liant l'un desdits éléments de liaison (16, 17) audit caisson (2).

6. Module de train d'atterrissage avant selon l'une quelconque des revendications précédentes, **caractérisé en ce que** le système de fixation (9) est configuré pour réaliser une fixation auxiliaire d'un bord supérieur (4) du caisson (2), entourant l'ouverture (3) dudit caisson (2) ouvert.

7. Module de train d'atterrissage avant selon l'une quelconque des revendications précédentes, **caractérisé en ce que** ledit caisson (2) comporte une cloison avant (20) plane.

8. Module de train d'atterrissage avant selon l'une quelconque des revendications précédentes, **caractérisé en ce que** ledit caisson (2) est pourvu d'au moins une trappe d'accès (21, 22) permettant d'accéder à l'intérieur du caisson (2).

9. Aéronef, **caractérisé en ce qu'**il est pourvu d'un module de train d'atterrissage avant (1) selon l'une quelconque des revendications 1 à 8.

10. Aéronef selon la revendication 9, **caractérisé en ce qu'**il comporte une baie (10) à l'avant sous le poste de pilotage (11), dans laquelle est fixé ledit module de train d'atterrissage avant (1).

11. Aéronef selon la revendication 10, **caractérisé en ce que** la paroi (25) de ladite baie (10) est formée d'une pluralité de secteurs adjacents (27A à 27F).

12. Aéronef selon la revendication 11, **caractérisé en ce que** la paroi (26) de ladite baie (10) présente une forme courbe.

13. Aéronef selon l'une quelconque des revendications 10 à 12, **caractérisé en ce qu'**il comporte dans la baie (10) :
- des supports de fixation avant et arrière (21A, 21B, 21C, 21D) pour lesdits éléments de liaison (16, 17) ; et
- des supports de fixation (22A, 22B) pour ledit châssis de porte (14).

14. Aéronef selon l'une quelconque des revendications 9 à 13, **caractérisé en ce qu'**il est pourvu d'une fixation auxiliaire du bord supérieur (4) du caisson (2) sur le fuselage (13) de l'aéronef AC.

15. Aéronef selon l'une quelconque des revendications 9 à 14, **caractérisé en ce qu'**une cloison avant (20) du module de train d'atterrissage avant (1) est complémentaire d'une cloison avant (23) du fuselage (13) de l'aéronef (AC), lesdites cloisons avant (20, 23) formant une paroi unique lorsque le module de train d'atterrissage avant (1) est fixé sur l'aéronef (AC).

16. Aéronef selon l'une quelconque des revendications 9 à 15, **caractérisé en ce que** la
paroi externe aérodynamique (12) du caisson (2) du module de train d'atterrissage avant (1) correspond à une partie avant basse du fuselage (13) de l'aéronef (AC).

## Patentansprüche

1. Vorderes Fahrwerkmodul für ein Luftfahrzeug,
wobei das Modul einstückig ist, das heißt eine unitäre Baugruppe bildet, die direkt an das Luftfahrzeug montiert werden kann, wobei das Modul einen offenen Kasten (2) aufweist, der eine aerodynamische Außenwand (12) aufweist, wobei der Kasten (2) ferner mit mindestens einer Tür (5A, 5B) versehen ist, die dazu ausgestaltet ist, dass sie geöffnet und geschlossen werden kann, wobei der Kasten (2) ein ausbringbares vorderes Fahrwerk (6) enthält, das so ausgestaltet ist, dass es durch die Tür (5A, 5B) ausgebracht werden kann, wobei das vordere Fahrwerkmodul (1) ein Befestigungssystem (9) aufweist, das dazu bestimmt ist, das vordere Fahrwerkmodul (1) an dem Luftfahrzeug (AC) zu befestigen.

2. Vorderes Fahrwerkmodul nach Anspruch 1,
**dadurch gekennzeichnet, dass** der Kasten (2) eine aerodynamische Außenform (12) aufweist, die in montierter und befestigter Position einer für einen vorderen unteren Teil des Rumpfs (13) des Luftfahrzeugs (AC) vorbestimmten Form entspricht.

3. Vorderes Fahrwerkmodul nach einem der Ansprüche 1 und 2,
**dadurch gekennzeichnet, dass** der Kasten (2) mit einer Türzarge (14) und mit zwei benachbarten Türen (5A, 5B) versehen ist, die jeweils mit einem Teil (15A, 15B) dieser Türzarge (14) verbunden sind.

4. Vorderes Fahrwerkmodul nach einem der vorhergehenden Ansprüche,
**dadurch gekennzeichnet, dass** das Befestigungssystem (9) Verbindungselemente (16, 17) aufweist, mit denen mindestens das vordere Fahrwerk (6) verbunden ist, wobei die Verbindungselemente (16, 17) so ausgestaltet sind, dass sie mit dem Luftfahrzeug (AC) verbunden werden können.

5. Vorderes Fahrwerkmodul nach Anspruch 4,
**dadurch gekennzeichnet, dass** es eine Vielzahl von Verstärkungselementen (18A, 18B, 18C, 18D) aufweist, wobei jedes der Verstärkungselemente (18A, 18B, 18C, 18D) eines der Verbindungselemente (16, 17) mit dem Kasten (2) verbindet.

6. Vorderes Fahrwerkmodul nach einem der vorhergehenden Ansprüche,
**dadurch gekennzeichnet, dass** das Befestigungssystem (9) dazu ausgestaltet ist, eine zusätzliche Befestigung eines oberen Rands (4) des Kastens (2) bereitzustellen, die die Öffnung (3) des offenen Kastens (2) umgibt.

7. Vorderes Fahrwerkmodul nach einem der vorhergehenden Ansprüche,
**dadurch gekennzeichnet, dass** der Kasten (2) eine ebene vordere Trennwand (20) aufweist.

8. Vorderes Fahrwerkmodul nach einem der vorhergehenden Ansprüche,
**dadurch gekennzeichnet, dass** der Kasten (2) mit mindestens einer Zugangsluke (21, 22) versehen ist, über die Zugang zum Inneren des Kastens (2) gewährt wird.

9. Luftfahrzeug,
**dadurch gekennzeichnet, dass** es mit einem vorderen Fahrwerkmodul (1) nach einem der Ansprüche 1 bis 8 versehen ist.

10. Luftfahrzeug nach Anspruch 9,
**dadurch gekennzeichnet, dass** es vorne unter dem Cockpit (11) eine Einbuchtung (10) aufweist, in der das vordere Fahrwerkmodul (1) befestigt ist.

11. Luftfahrzeug nach Anspruch 10,
**dadurch gekennzeichnet, dass** die Wand (25) der Einbuchtung (10) aus einer Vielzahl von benachbarten Sektoren (27A bis 27F) gebildet ist.

12. Luftfahrzeug nach Anspruch 11,
**dadurch gekennzeichnet, dass** die Wand (26) der Einbuchtung (10) eine gekrümmte Form aufweist.

13. Luftfahrzeug nach einem der Ansprüche 10 bis 12,
**dadurch gekennzeichnet, dass** es Folgendes in der Einbuchtung (10) aufweist:
- vordere und hintere Befestigungsstützen (21A, 21B, 21C, 21D) für die Verbindungselemente (16, 17) und
- Befestigungsstützen (22A, 22B) für die Türzarge (14) .

14. Luftfahrzeug nach einem der Ansprüche 9 bis 13,
**dadurch gekennzeichnet, dass** es mit einer zusätzlichen Befestigung des oberen Rands (4) des Kastens (2) am Rumpf (13) des Luftfahrzeugs AC versehen ist.

15. Luftfahrzeug nach einem der Ansprüche 9 bis 14,
**dadurch gekennzeichnet, dass** eine vordere Trennwand (20) des vorderen Fahrwerkmoduls (1) einer vorderen Trennwand (23) des Rumpfs (13) des Luftfahrzeugs (AC) komplementär ist, wobei die vorderen Trennwände (20, 23) eine einzige Wand bilden, wenn das vordere Fahrwerkmodul (1) an dem Luftfahrzeug (AC) befestigt ist.

16. Luftfahrzeug nach einem der Ansprüche 9 bis 15,
**dadurch gekennzeichnet, dass** die aerodynamische Außenwand (12) des Kastens (2) des vorderen Fahrwerkmoduls (1) einem vorderen unteren Teil des Rumpfs (13) des Luftfahrzeugs (AC) entspricht.

## Claims

1. Front landing gear module for aircraft, the module being a one-piece module, namely forming an individual assembly, capable of being mounted directly on the aircraft, said module comprising an open box (2) having an aerodynamic outer wall (12), said box (2) furthermore being provided with at least one door (5A, 5B) configured to be able to be opened and closed, said box (2) containing a deployable front landing gear (6) configured to be able to be deployed through said door (5A, 5B), said front landing gear module (1) comprising an attachment system (9) intended to attach said front landing gear module (1) on the aircraft (AC).

2. Front landing gear module according to Claim 1, **characterized in that** said box (2) has an aerodynamic outer shape (12) corresponding, in the assembled and attached position, to a predetermined shape for a bottom front part of the fuselage (13) of the aircraft (AC) .

3. Front landing gear module according to one of Claims 1 and 2, **characterized in that** said box (2) is provided with a door frame (14) and with two adjacent doors (5A, 5B), each linked to a part (15A, 15B) of this door frame (14).

4. Front landing gear module according to any one of the preceding claims, **characterized in that** the attachment system (9) comprises link elements (16, 17), to which at least the front landing gear (6) is linked, said link elements (16, 17) being configured to be able to be linked to the aircraft (AC).

5. Front landing gear module according to Claim 4, **characterized in that** it comprises a plurality of strengthening elements (18A, 18B, 18C, 18D), with each of said strengthening elements (18A, 18B, 18C, 18D) linking one of said link elements (16, 17) to said box (2) .

6. Front landing gear module according to any one of the preceding claims, **characterized in that** the attachment system (9) is configured to provide a supplementary attachment of an upper edge (4) of the box (2), surrounding the opening (3) of said open box (2).

7. Front landing gear module according to any one of the preceding claims, **characterized in that** said box (2) comprises a flat front bulkhead (20).

8. Front landing gear module according to any one of the preceding claims, **characterized in that** said box (2) is provided with at least one access hatch (21, 22) granting access to the inside of the box (2).

9. Aircraft, **characterized in that** it is provided with a front landing gear module (1) according to any one of Claims 1 to 8.

10. Aircraft according to Claim 9, **characterized in that** it comprises a bay (10) at the front under the cockpit (11), in which bay said front landing gear module (1) is attached.

11. Aircraft according to Claim 10, **characterized in that** the wall (25) of said bay (10) is formed by a plurality of adjacent sectors (27A to 27F).

12. Aircraft according to Claim 11, **characterized in that** the wall (26) of said bay (10) has a curved shape.

13. Aircraft according to any one of Claims 10 to 12, **characterized in that** it comprises, in the bay (10):
- front and rear attachment supports (21A, 21B, 21C, 21D) for said link elements (16, 17); and
- attachment supports (22A, 22B) for said door frame (14).

14. Aircraft according to any one of Claims 9 to 13, **characterized in that** it is provided with a supplementary attachment of the upper edge (4) of the box (2) on the fuselage (13) of the aircraft (AC).

15. Aircraft according to any one of Claims 9 to 14, **characterized in that** a front bulkhead (20) of the front landing gear module (1) matches a front bulkhead (23) of the fuselage (13) of the aircraft (AC), said front bulkheads (20, 23) forming a single wall when the front landing gear module (1) is attached on the aircraft (AC).

16. Aircraft according to any one of Claims 9 to 15, **characterized in that** the aerodynamic outer wall (12) of the box (2) of the front landing gear module (1) corresponds to a bottom front part of the fuselage (13) of the aircraft (AC).
